## Europäisches Patentamt

## European Patent Office

## Office européen des brevets

(11) Veröffentlichungsnummer: **0 163 181**
**B1**

(12) **EUROPÄISCHE PATENTSCHRIFT**

(45) Veröffentlichungstag der Patentschrift:
04.11.87

(21) Anmeldenummer: **85105755.4**

(22) Anmeldetag: **10.05.85**

(51) Int. Cl.⁴: **B 60 N 3/08,** A 24 F 19/06

(54) **Kippascher, insbesondere für Fahrzeuge.**

(30) Priorität: **29.05.84 DE 3419982**

(43) Veröffentlichungstag der Anmeldung:
**04.12.85 Patentblatt 85/49**

(45) Bekanntmachung des Hinweises auf die Patenterteilung:
**04.11.87 Patentblatt 87/45**

(84) Benannte Vertragsstaaten:
**FR GB IT SE**

(56) Entgegenhaltungen:
**CH-A-384 387**
**DE-B-2 030 478**
**FR-A-2 078 548**
**FR-A-2 306 601**
**GB-A-519 847**
**US-A-2 119 267**
**US-A-2 311 968**
**US-A-2 770 388**

(73) Patentinhaber: **Gebr. Happich GmbH, Postfach 10
02 49 Clausenbrücke 1, D-5600 Wuppertal 1 (DE)**

(72) Erfinder: **Dabringhaus, Volker, Paul- Löbe- Strasse
55, D-5600 Wuppertal 1 (DE)**
Erfinder: **Dietz, Günter, Zum Lohbusch 44 C,
D-5600 Wuppertal 1 (DE)**
Erfinder: **Wegel, Peter, Leimbacherstrasse 73,
D-5600 Wuppertal 2 (DE)**
Erfinder: **Bowman, H. David, Hedgerows London
End, Priors Hardwick Warwickshire (GB)**
Erfinder: **Körber, Jürgen, Käthe- Kollwitz- Weg 4/1,
D-7032 Sindelfingen (DE)**
Erfinder: **Seidl, Horst, Postplatz 12, D-7030
Böblingen (DE)**

LIBER, STOCKHOLM 1987

## Beschreibung

Die Erfindung bezieht sich auf einen Kippascher, insbesondere für Fahrzeuge, bestehend aus einem in einer Wandaussparung befestigbaren Aufnahmerahmen, einem damit scharnierartig verbundenen Aufnahmegehäuse, einem darin herausnehmbar angeordneren Aschereinsatz und einer am Aufnahmegehäuse angeordneten Raste zur Sicherung des Aschereinsatzes im Aufnahmegehäuse.

Ein Kippascher der gattungsgemäßen Art ist in der DE-B-2 030 478 beschrieben. Bei diesem bekannten Ascher ist vorgesehen, an den Innenseiten der Seitenwände des Aufnahmegehäuses Nuten oder Vorsprünge zur sicheren Befestigung und Führung des Aschereinsatzes anzuformen. Solche Nuten oder Vorsprünge erschweren aber, insbesondere bei Dunkelheit, das Einsetzen des Aschereinsatzes in das Aufnahmegehäuse, weil das Einsetzen nur unrer Sichtkontrolle vorgenommen werden kann. Bei dem bekannten Ascher ist aber nicht nur das Einsetzen, sondern auch das zum Zwecke des Entleerens oftmals erforderliche Herausnehmen des Aschereinsarzes aus dem Aufnahmegehäuse beschwerlich, und zwar, weil der Widerstand eines den Aschereinsatz am oberen Randbereich übergreifenden als Raste dienenden Wulstes, der den Aschereinsatz klapperfrei festlegen soll, überwunden werden muß. Der durch den Wulst gebildete Widerstand kann, wie in Spalte 6, Abs. 2 dieser Druckschrift angegeben, überwunden werden, wenn der Aschereinsatz am daran vorgesehenen Glutabstreifer erfaßt und nach oben gezogen wird. Dieser Vorschlag dürfte, wegen des damit zwangsläufig verbundenen Beschmutzens der Finger der den Aschereinsatz entnehmenden Person, keine breite Zustimmung erfahren. Die zweite, in der Druckschrift angedeutete Möglichkeit, den Aschereinsatz an den Seitenwänden zu erfassen, scheidet wegen der ungünstigen Hebelwirkung in Bezug auf den Wulst und insbesondere auch aus Platzgründen im allgemeinen aus.

Der Erfindung liegt nun, ausgehend von einem Kippascher der eingangs genannten Art die Aufgabe zugrunde, Vorsorge dafür zu treffen, daß der Aschereinsatz zum Erleichtern des Herausnehmens aus dem Aufnahmegehäuse unter Einsatz kostengünstiger Mittel schnell und einfach in eine griffgünstige Position überführbar ist.

Diese Aufgabe wird erfindungsgemäß dadurch gelöst, daß die Raste, die den Aschereinsatz gegen die Kraft einer das Herausnehmen des Aschereinsatzes aus dem Aufnahmegehäuse unterstützenden Auswerferfeder im Aufnahmegehäuse hält, als mit dem Aschereinsatz in Eingriff stehende Rastfeder ausgebildet ist, die derart am Aufnahmegehäuse befestigt ist, daß sie bei in Offenstellung gekippter Lage des Aufnahmegehäuses am Aufnahmerahmen anliegt und durch eine entgegen ihrer Kraft erfolgende, geringfügig über die Offenstellung hinausgehende Kippbewegung des Aufnahmegehäuses vom Aschereinsatz abhebbar ist.

Durch die DE-B-21 05 032 ist es bekannt einen Aschereinsatz und durch das DE-U-70 25 722 ist es bekannt ein in einem Schubladenteil angeordnetes Einsatzteil durch eine Feder zu belasten, wobei die Feder im ersten Fall dem Rücktransport des Aschereinsatzes nach einem aus Sicherheitsgründen ermöglichten Ausweichen in das Aufnahmegehäuse dient, während die Feder im zweiten Fall die Aufgabe hat, das Einsatzteil beim Herausziehen des Schubladenteils aus diesem nach oben in eine Schräglage herauszudrücken, um das Einsatzteil für die Aufnahme von Zigaretten zugänglich zu machen.

Durch die erfindungsgemäße Maßnahme kann der anhebbar im Aufnahmegehäuse gelagerte Aschereinsatz nunmehr ohne die Gefahr der Fingerbeschmutzung dem Aufnahmegehäuse entnommen werden und es ergibt sich weiterhin der Vorteil einer federelastischen und damit klapperfreien Halterung des Aschereinsatzes im Aufnahmegehäuse. Die federelastische Halterung erlaubt zudem den Verzicht auf Führungsnuten oder -vorsprünge, so daß der Aschereinsatz, ohne daß hierfür eine Sichtkontrolle notwendig wäre, in die hierfür vorgesehene Öffnung im Aufnahmegehäsue eingesteckt werden kann. Das Einsetzen des Aschereinsatzes erfolgt dann entgegen der Kraft der Auswerferfeder, die aber von Hand mühelos überwunden werden kann, und zwar bis zum selbsttätigen Einrasten der den Aschereinsatz lagesichernden Rastfeder. Durch Entrasten der Rastfeder wird die Auswerferfeder in Funktion gesetzt, die somit durch entsprechende Vorgabe der Federkennlinie vorteilhafterweise ein solch weites Anheben des Aschereinsatzes bewirkt, daß dieser sich in einer griffgünstigen Lage befindet, in der er mühelos von Hand erfaßt und zum Zwecke der Entleerung vollständig aus dem Aufnahmegehäsue herausgezogen werden kann.

Eine vorteilhafte Weiterbildung der Erfindung besteht darin, daß die Rastfeder wenigstens einen den Aschereinsatz im Aufnahmegehäuse lösbar halternden Rastnocken und wenigstens einen ein Herausschnellen des Aschereinsatzes aus dem Aufnahmegehäuse nach Ausrasten des Rastnockens verhindernden Bremsnocken aufweist:

Diese Maßnahme erbringt den Vorteil, daß keine genaue Feinabstimmung in bezug auf die Federkraft der Auswerferfeder erforderlich ist, weil durch den Bremsnocken auch dann ein abruptes Herausschnellen des Aschereinsatzes aus dem Aufnahmegehäuse mit den sich daraus ergebenden nachteiligen Folgen verhindert wird, wenn die Federkraft auch wesentlich größer als erforderlich ist. Mit Rücksicht darauf, daß die Federkraft der Auswerferfeder auf jeden Fall so groß sein muß, daß auch ein völlig gefüllter Aschereinsatz noch in eine griffgünstge Position angehoben wird, gewinnt die vorstehend aufgezeigte Maßnahme noch an Bedeutung; denn es ist einsehbar, daß die Federkraft der Auswerferfeder immer dann zu groß sein wird, wenn die Aufnahmekapazität des Aschereinsatzes nur zum Teil genutzt wird.

In weiterer Ausgestaltung der Erfindung ist vorgesehen, daß die Rastfeder, die aus einem Federstahlbandabschnitt gebildet ist, an der Außenseite der dem Aufnahmerahmen zugewandten Gehäusewand des Aufnahmegehäuses befestigt ist und mit einer am freien Endbereich vorgesehenen, als Rastnocken dienenden V-förmigen Abwinklung eine am oberen Ende der Gehäusewand befindlichen Aussparung durchdringt und den Aschereinsatz an dessen Rückwand beaufschlagt, welche im Beaufschlagungsbereich eine Kerbe für den Rastnocken aufweist. Hierdurch ergibt sich eine einfache kostengünstige Herstellung und Anordnung der Rastfeder, die zudem in bezug auf ihre Anordnung gegen jegliche Beschädigung und auch gegen eine ihre Funktion in Frage stellende Verschmutzung geschützt ist. Dem Grunde nach ist aber die Anwendung einer V-förmigen Rastfeder für ineinander verschiebbare Aschenbecherteile z. B. aus der DE-A-2 157 661 bekannt.

Bevorzugterweise ist weiterhin vorgesehen, daß die Rastfeder, die aus einem Befestigungslappen und einem einendig daran sitzenden, zwei Schenkel umfassenden Rastnocken besteht, eine dreiseitig freigeschnittene Federzunge aufweist, deren Wurzel sich im Befestigungslappen befindet und deren freier Endbereich eine mit dem Rastnocken zusammenfallende Abwinklung aufweist. Durch die zweifache Abwinklung, die den V-förmigen Rastnocken bildet, wird damit gleichzeitig auch der Bremsnocken, der ebenfalls V-förmig ist, hergestellt und der Bremsnocken liegt geschützt in einer mittigen Aussparung des Rastnockens, wobei die Aussparung durch den für die Federzunge vorgesehenen Freischnitt gebildet ist. Das Merkmal der dreiseitig freigeschnittenen Federzunge ist allerdings durch die DE-B-12 32 778 bekannt.

Der erfindungsgemäße Ascher bzw. das Aufnahmegehäuse desselben, läßt sich in üblicher Weise in die Schließ- und Offenstellung kippen und damit auch in üblicher Weise benutzen. Der Ascher nach der Erfindung unterscheidet sich aber von denen zum Stande der Technik gehörenden Art dadurch, daß die Offenstellung des Aufnahmegehäuses durch einen federelastischen Anschlag gebildet ist, welcher eine Überrastung erlaubt. Wird nun im praktischen Gebrauch des Aschers das Aufnahmegehäuse in die Offenlage gekippt und festgestellt, daß der Aschereinsatz geleert werden müßte, so ist es hierfür lediglich erforderlich, das Aufnahmegehäuse gegen die Kraft der Rastfeder, um einige wenige Winkelgrade weiterzukippen. Durch dieses Weiterkippen wird der Rastnocken aus der sich von diesem entfernenden Kerbe herausgehoben und die auf den Aschereinsatz wirkende Kraft der Auswerferfeder kann diesen dann bis in eine griffgünstige Position anheben. Das Entrasten des Rastnockens hat keinen Einfluß auf den hierbei in seiner Lage verharrenden Bremsnocken. Vielmehr bleibt der Bremsnocken in stetiger Anlage am Aschereinsatz, um seiner Aufgabe gerecht zu werden. In diesem Zusammenhang ist es jedoch von Vorteil, wenn nach einer weiteren Ausgestaltung der Erfindung vorgesehen ist, daß die in der hinteren Wandung des Aschereinsatzes vorgesehene Kerbe in ihrem mittleren, zur Aufnahme des Bremsnockens dienenden Bereich in eine nach unten verlaufende, durch einen Anschlag begrenzte Nut übergeht. Dadurch wird nach dem Entrasten der Rastfeder der Aschereinsatz durch die Auswerferfeder nicht abrupt hochgeschnellt, sondern das Austreten des oberen Randbereiches des Aschereinsatzes aus dem Aufnahmegehäuse wird durch den Bremsnocken gebremst und durch den auf den Bremsnocken auftreffenden Anschlag auch begrenzt. Es ist damit ausgeschlossen, daß der Aschereinsatz völlig aus dem Aufnahmegehäuse ausgeworfen werden und sich ins Fahrzeug entleeren kann. In diesem Zusammenhang wird noch bemerkt, daß der Bremsnocken beim Herausziehen des Aschereinsatzes aus dem Aufnahmegehäuse den Anschlag durch ein federelastisches Zurückweichen der Federzunge ohne nennenswerten Widerstand passieren kann, zumal es ohne weiteres möglich ist, den Bremsnocken und/oder den Anschlag mit ein Zurückweichen der Federzunge begünstigenden Schrägflächen auszubilden.

Durch die erfindungsgemäße Ausbildung und Anordnung der Rastfeder vermag diese gleich mehrere Funktionen zu erfüllen, und zwar den Aschereinsatz zu halten und zu lösen, zu bremsen und in bestimmter Lage wieder zu halten und weiterhin als Anschlag des Aufnahmegehäuses in der Offenstellung und Zurückführung des überrasteten Aufnahmegehäuses in die Offenstellung zu dienen.

Als Auswerferfeder kann z. B. eine Schraubenfeder dienen. Bevorzugterweise ist aber vorgesehen, daß die Auswerferfeder aus einem an der Bodenwandung des Aufnahmegehäuses befestigten Federstahlbandabschnitt mit schräg hochgestellten, Federarme bildenden Endbereichen besteht. Eine solche Auswerferfeder ist einfach und kostengünstig in der Herstellung und im Gebrauch robust.

Die Erfindung wird nachfolgend anhand eines in der Zeichnung dargestellten Ausführungsbeispiels näher erläutert. Es zeigen

Fig. 1 den Längsschnitt durch den Kippascher etwa folgend der Linie I - I der Fig. 2,

Fig. 2 den Schnitt II - II nach Fig. 1 in geschlossener Stellung des Kippaschers,

Fig. 3 den Schnitt II - II nach Fig. 1 in geöffneter Stellung des Kippaschers, mit griffbereit angehobenen Aschereinsatz

Fig. 4 eine Teilansicht auf die Rückseite des Aschereinsatzes und

Fig. 5 die Rastfeder in vergrößertem Maßstab.

Der neue Kippascher besteht aus eine, Aufnahmerahmen 1, einem damit scharnierartig verbundenen Aufnahmegehäuse 2 und einem darin herausnehmbar angeordneten Aschereinsatz 3.

Der Aufnahmerahmen 1 weist eine frontseitige Öffnung 4 auf, die die Montage des Aufnahmegehäuses 2 und eine kippbewegliche Lagerung desselben ermöglicht. Der zweckmäßigerweise als Kunststoff-Spritzgußkörper ausgebildete Aufnahmerahmen 1 weist weiterhin Seitenwangen 5 und eine bogenförmig verlaufende Kopfwandung 6 auf. Die Seitenwangen 5 sind mit Lagerbohrungen 7 ausgebildet, in die am Aufnahmegehäuse 2, welches ebenfalls bevorzugterweise aus einem Kunststoff-Spritzkörper besteht, angeformte Lagerzapfen 8 eingreifen.

Die dem Aufnahmegehäuse 2 zugewandte Seite der Kopfwandung 6 weist eine Führungsbahn 9 auf, die einendig durch einen Anschlag 10 und anderendig durch einen Nocken 11 begrenzt ist. Die Führungsbahn 9 dient zur gleitenden Anlage einer am Aufnahmegehäuse 2 befestigten Rastfeder 12. Durch die Rastfeder 12 wird das Aufnahmegehäuse 2 mit Aschereinsatz 3 in der Offenlage und in der Schließlage, wie auch in Zwischenlagen, klapperfrei gehalten.

Das Aufnahmegehäuse 2 weist eine Becherform auf, trägt an den Seitenwandungen die bereits erwähnten Lagerzapfen 8, an der Vorderwandung 13 eine den ästhetischen Anforderungen gerecht werdende Frontplatte 14 und an der hinteren Wandung 15, neben der schon erwähnten Rastfeder 12, eine weitere Rastfeder 16, die zur Halterung des Aschereinsatzes 3 dient. Die z. B. mittels eines Niets 17 an der Wandung 15 befestigte Rastfeder 16 weist eine durch eine zweifache Abwinklung gebildete, V-förmige Rastnase 18 auf, welche eine in der Wandung 15 vorgesehene Ausnehmung 19 durchdringt und in den Öffnungsraum des Aufnahmegehäuses 2 hineinragt. Das Aufnahmegehäuse 2 ist weiterhin mit einer sogenannten Auswerferfeder 20 ausgerüstet, die aus einem an der Bodenwandung 21 befestigten Federstahlbandabschnitt mit schräg hochgestellten, Federarme 22 bildenden Endbereichen besteht.

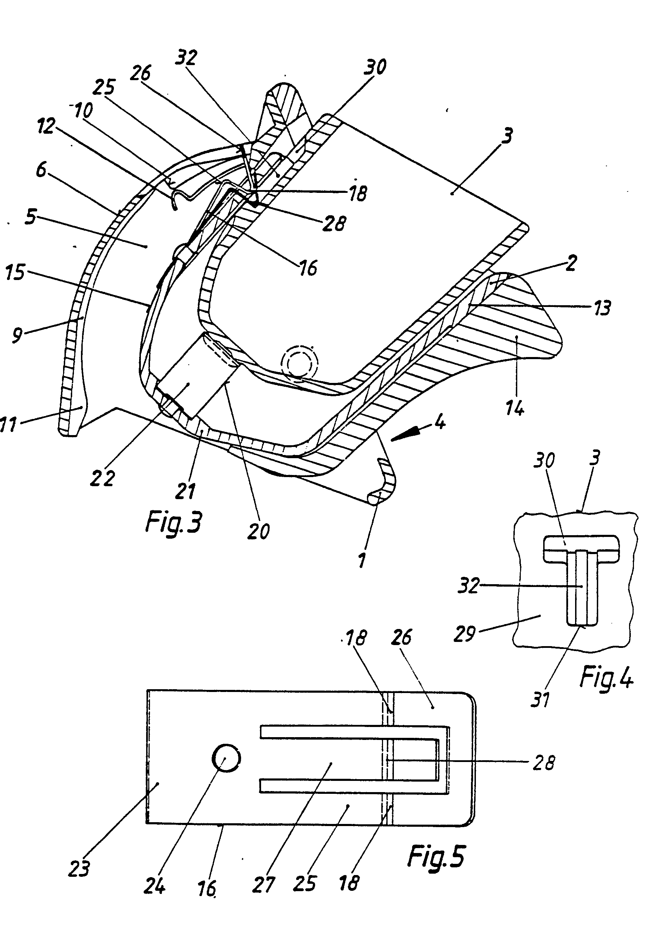

Die Rastfeder 16 weist (vgl. auch Fig. 5) einen Befestigungslappen 23 mit einem Loch 24 für den Niet 17, eine zwei Schenkel 25 und 26 umfassende Rastnase 18 und weiterhin eine dreiseitig freigeschnittene Federzunge 27 auf, deren Wurzel sich im Befestigungslappen 23 befindet und deren freier Endbereich eine mit dem Rastnocken 18 zusammenfallende, als Bremsnocken 28 dienende V-förmige Abwinklung aufweist. Der Rastnocken 18 erhält durch den Bremsnocken 28 eine mittige Unterbrechung.

Der Aschereinsatz 3 besitzt eine dem Aufnahmeraum des Aufnahmegehäuses 2 angepaßte becherförmige Gestaltung und ist aus Metallblech oder aus hitzebeständigem Kunststoff gebildet. Die Besonderheit des Aschereinsatzes 3 besteht darin, daß dieser an seiner Rückseite 29 eine parallel zur Scharnierachse verlaufende Kerbe 30 (vgl. Fig. 4) aufweist, die zum Einrasten der Rastnase 18 und auch zum Einrasten des Bremsnockens 28 dient. Die Kerbe 30 geht in ihrem mittleren, zur Aufnahme des Bremsnockens 28 dienenden Bereich in eine nach unten gerichtete, durch einen Anschlag 31 begrenzte Nut 32 über.

Beim Zusammenbau des Aschers wird zunächst das Aufnahmegehäuse 2 mit den Rastfedern 12 und 16 sowie mit der Auswerferfeder 20 bestückt und das Aufnahmegehäuse 2 wird hiernach in den Aufnahmerahmen 1 eingesetzt. Durch anschließendes Einsetzen des Aschereinsatzes 3 wird diese Einbaueinheit dann vervollständigt. Die Montage des Aschers in einer nichtgezeigten Wandaussparung erfolgt in herkömmlicher Weise.

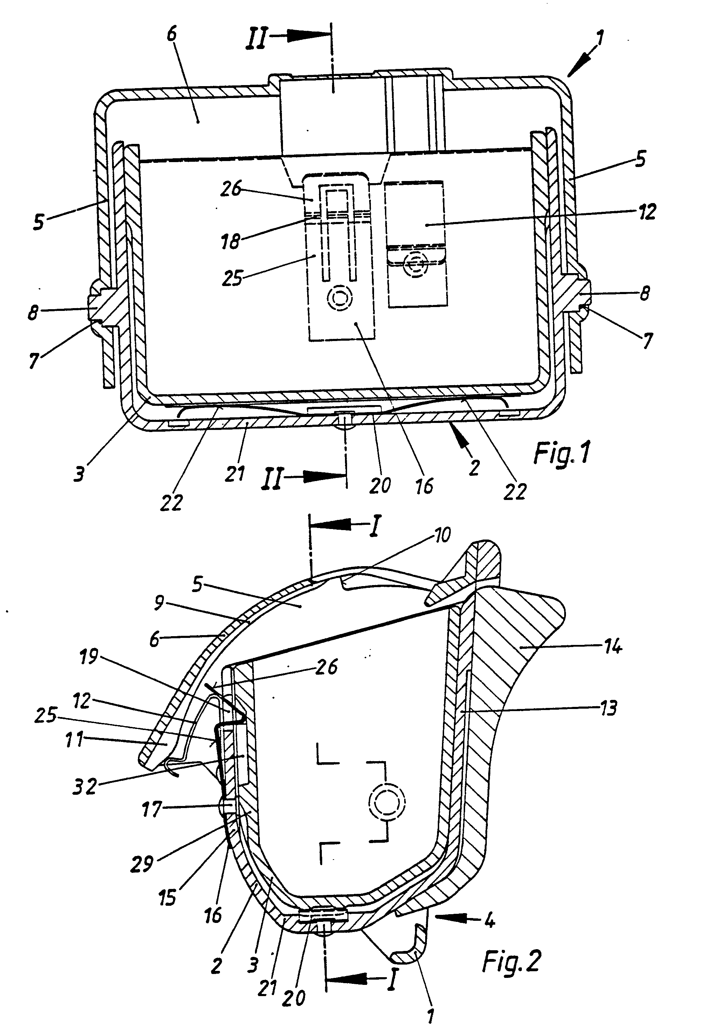

Die Funktionsweise des neuen Kippaschers ist folgende: Das Aufnahmegehäuse 2 ist durch die in den Lagerbohrungen 7 drehbeweglich gelagerten Lagerzapfen 8 scharnierartig mit dem Aufnahmerahmen 1 verbunden und kann daher aus der Schließstellung nach Fig. 2 in die Offenstellung nach Fig. 3 gekippt werden, wobei Fig. 3 in etwa die Einbaulage des neuen Kippaschers verdeutlicht. Beim Überführen des Aufnahmegehäuses 2 mit Aschereinsatz 3 in die offene oder geschlossene Lage, gleitet die am freien Ende der Rastfeder 12 ausgebildete Nase über die Führungsbahn 9 und definiert nach Überwinden des Nockens 11 die geschlossene bzw. bei Anlage am Anschlag 10 die offene Lage des Aschers. In der offenen Lage kann nun der Aschereinsatz 3 entnommen und wieder eingesetzt werden. Beim Einsetzen des Aschereinsatzes 3 gleitet die entgegen der Federkraft zurückweichende Rastnase 18 und der Bremsnocken 28 über die Rückseite 29 des Aschereinsatzes 3, und zwar bis zum Erreichen der Kerbe 30, in welche die Rastnase 18 nun einrastet und damit den Aschereinsatz 3 entgegen der Kraft der durch das Einsetzen gespannten Auswerferfeder 20 in dem Aufnahmegehäuse 2 hält. Das Einrasten des Bremsnockens 28 in die nach unten gezogene Nut 32 erfolgt entsprechend früher.

Zum Entnehmen des Aschereinsatzes 3 wird lediglich das Aufnahmegehäuse 2 geringfügig überrastet, d. h. geringfügig weiter, als durch den Anschlag 10 definiert, in Offenstellung gekippt. Dabei wird der Gleitnocken der Rastfeder 12 über den Anschlag 10 gezogen und, was wesentlich ist, der freie Endbereich des Schenkels 26 der Rastfeder 16 gegen die hier befindliche Innenkante des Aufnahmerahmen 1 gezogen und hier blockiert mit der Folge, daß die Rastnase 18 die Kerbe 30 freigibt. Damit wird die Energie der Auswerferfeder 20 freigesetzt und der Aschereinsatz 3 gebremst hochgestoßen, und zwar gebremst deshalb, weil der Bremsnocken 28 im Reibungskontakt mit dem Aschereinsatz 3 verbleibt. Der Hubweg ist zudem durch den Anschlag 31 begrenzt. Der somit angehobene Aschereinsatz kann nun leicht von Hand erfaßt und gänzlich aus dem Aufnahmegehäuse 2 herausgezogen werden. Da das Überrasten des Aufnahmegehäuses 2 entgegen der Kraft der Rastfeder 16 erfolgt, ist es verständlich, daß die Kraft der Rastfeder 16 auch ausreichend groß ist, um das Aufnahmegehäuse 2 selbsttätig in die Lage zurückzuführen, die es vor dem Überrasten eingenommen hat. in Fig. 3 ist die Überrastungslage des Aufnahmegehäuses 2 dargestellt. In der normal geöffneten Lage liegt der Gleitnocken der Restfeder 12 am Anschlag 10 an.

**Patentansprüche**

1. Kippascher, insbesondere für Fahrzeuge, bestehend aus einem in einer Wandaussparung befestigbaren Aufnahmerahmen (1), einem damit scharnierartig verbundenen Aufnahmegehäuse (2), einem darin herausnehmbar angeordneten Aschereinsatz (3) und einer am Aufnahmegehäuse (2) angeordneten Raste zur Sicherung des Aschereinsatzes (3) im Aufnahmegehäuse (2), dadurch gekennzeichnet, daß die Raste, die den Aschereinsatz (3) gegen die Kraft einer das Herausnehmen des Aschereinsatzes (3) aus dem Aufnahmegehäuse (2) unterstützenden Auswerferfeder (20) im Aufnahmegehäuse (2) hält, als mit dem Aschereinsatz (3) in Eingriff stehende Rastfeder (16) ausgebildet ist, die derart am Aufnahmegehäuse (2) befestigt ist, daß sie bei in Offenstellung gekippter Lage des Aufnahmegehäuses (2) am Aufnahmerahmen (1) anliegt und durch eine entgegen ihrer Kraft erfolgende, geringfügig über die Offenstellung hinausgehende Kippbewegung des Aufnahmegehäuses (2) vom Aschereinsatz (3) abhebbar ist.

2. Kippascher nach Anspruch 1, dadurch gekennzeichnet, daß die Rastfeder (16) wenigstens einen den Aschereinsarz (3) im Aufnahmegehäuse (2) lösbar halternden Rastnocken (18) und wenigstens einen ein Herausschnellen des Aschereinsatzes (3) aus dem Aufnahmegehäuse (2) nach Ausrasten des Rastnockens (18) verhindernden Bremsnocken (28) aufweist.

3. Kippascher nach Anspruch 1 oder 2, dadurch gekennzeichnet, daß die Rastfeder (16), die aus einem Federstahlbandabschnitt gebildet ist, an der Außenseite der dem Aufnahmerahmen (1) zugewandten Gehäusewand (15) des Aufnahmegehäuses (2) befestigt ist und mit einer am freien Endbereich vorgesehenen, als Rastnocken (18) dienenden V-förmmigen Abwinklung eine am oberen Ende der Gehäusewand (15) befindliche Aussparung (19) durchdringt und den Aschereinsatz (3) an dessen Rückwand beaufschlagt, welche im Beaufschlagungsbereich eine Kerbe (30) für den Rastnocken (18) aufweist.

4. Kippascher nach Anspruch 2 oder 3, dadurch gekennzeichnet, daß die Rastfeder (16), die aus einem Befestigungslappen (23) und einem einendig daran sitzenden, zwei Schenkel (25, 26) umfassenden Rastnocken (18) besteht, eine dreiseitig freigeschnittene Federzunge (27) aufweist, deren Wurzel sich im Befestigungslappen (23) befindet und deren freier Endbereich eine mit dem Rastnocken (18) zusammekallende als Bremsnocken (28) dienende V-förmige Abwinklung aufweist.

5. Kippascher nach einem oder mehreren der Ansprüche 2 bis 4, dadurch gekennzeichnet, daß die in der hinteren Wandung (29) des Aschereinsatzes (3) vorgesehene Kerbe (30) in ihrem mittleren, zur Aufnahme des Bremsnockens (28) dienenden Bereich in eine nach unten verlaufende, durch einen Anschlag (31) begrenzte Nut (32) übergeht.

6. Kippascher nach einem oder mehreren der Ansprüche 1 bis 5, dadurch gekennzeichnet, daß die Auswerferfeder (20) aus einem an der Bodenwandung (21) des Aufnahmegehäuses (2) befestigten Federstahlbandabschnitt mit schräg hochgestellten, Federarme (22) bildenden Endbereichen besteht.

**Claims**

1. A tiltable ash-tray, especially for a vehicle, the ashtray comprising a holding frame (1) fastenable into a wall recess, a holding box (2) hingedly joined to the frame, an ash-tray insert (3) removably mounted in the box, and a catch arranged on the holding box (2) for securing the insert (3) in the box (2), characterized in that the catch, which against the bias of an ejection spring (20) aiding the insert's (3) removal from the box (2) holds the insert (3) in the box (2), is a stop spring (16) engaging the insert (3), and in that the stop spring is fastened to the box (2) in such a manner that, when the box (2) has been tilted into its open position it abuts on the holding frame (1) but disengages from the insert (3) when the box (2) against the spring's bias is tilted slightly beyond its open position.

2. A tiltable ash-tray according to claim 1, characterized in that the stop spring (16) is provided with at least one latch (18) for removably holding the insert (3) in the box (2) and with at least one brake cam (28) for inhibiting- after the latch's (18) disengagement - the insert's (3) ejection from the box (2).

3. A tiltable ash-tray according to claim 1 or claim 2, characterized in that the stop spring (16) is a length of spring-steel strip and is fastened to the external face of the box's (2) wall (15) facing

**0 163 181**

the frame (1), that a V-shaped bend formed in the stop spring's (16) free end portion constitutes the latch (18) which extends through a clearance (19) in the upper end portion of the wall (15) and engages the insert's (3) rear wall, and in that the insert's rear wall is provided in its region engageable by the latch (18) with a notch (30) therefor.

4. A tiltable ash-tray according to claim 2 or claim 3, characterized in that the stop spring (16), which comprises a mounting strap (23) and, at one end of the latter, the latch (18) having two legs (25, 26), also includes a spring tongue (27) three sides of which are sheared out of the stop spring while the root of which is disposed in and integral with the mounting strap (23), and in that the spring tongue's free end portion is formed with a V-shaped bend which is coincident with the latch (18) and which serves as the brake cam (28).

5. A tiltable ash-tray according to any of the claims 2 to 4, characterized in that the central section of the notch (30) - provided in the insert's (3) rear wall (29) - serving to receive the brake cam (28) verges into a groove (32) extending downwardly and being terminated by a stop (31).

6. A tiltable ash-tray according to any of the preceding claims, characterized in that the ejection spring (20) is another length of spring-steel strip which is fastened at its central portion to the bottom wall (21) of the box (2) and the two end portions of which slope upwardly and act as spring arms.


**Revendications**

1. Cendrier basculant, en particulier pour véhicules, comprenant un cadre de fixation (1) pouvant être fixé dans un évidement de paroi, un boîtier de réception (2) relié à celui-ci par une articulation à charnière, un bac à cendres (3) qui y est introduit de façon amovible et un dispositif d'encliquetage placé sur le boîtier (2) pour fixer le bac à cendres (3) dans le boîtier (2), caractérisé en ce que le dispositif d'encliquetage, qui maintient le bac à cendres (3) dans le boîtier (2) contre la force d'un ressort d'éjection (20) facilitant le retrait du bac à cendres (3) du boîtier (2), est réalisé sous la forme d'un ressort d'encliquetage (16) en prise avec le bac à cendres (3), qui est fixé au boîtier (2) de telle façon que, dans la position du boîtier (2) basculée en position d'ouverture, il est en contact avec le cadre (1) et peut être écarté du bac à cendres (3) par un mouvement de basculement du boîtier (2) ayant lieu contre sa force, allant légèrement au-delà de la position d'ouverture.

2. Cendrier basculant selon la revendication 1, caractérisé en ce que le ressort d'encliquetage (16) comporte au moins une came d'encliquetage (18) maintenant de façon amovible le bac à cendres (3) dans le boîtier (2) et au moins une came de freinage (28) empêchant que le bac à cendres (3) sorte rapidement du boîtier (2), après le dégagement de la came d'encliquetage (18).

3. Cendrier basculant selon la revendication 1 ou 2, caractérisé en ce que le ressort d'encliquetage (16), qui est constitué par une section de bande d'acier à ressort, est fixé à la face extérieure de la paroi (15) du boîtier (2) située du côté du cadre (1) et traverse, par un coude en V prévu dans la zone terminale libre, servant de came d'encliquetage (18), un évidement (19), se trouvant à l'extrémité supériéure de la paroi de boîtier (15) et agit sur le bac à cendres (3) à sa paroi postérieure, qui comporte, dans la zone d'application, une encoche (30) pour la came d'encliquetage (18).

4. Cendrier basculant selon la revendication 2 ou 3, caractérisé en ce que le ressort d'encliquetage (16), qui comprend une patte de fixation (23) et une came d'encliquetage (18) placée sur lui à une extrémité comprenant deux branches (25, 26) comporte une languette élastique découpée sur trois côtés (27), dont la racine se trouve dans la patte de fixation (23) et dont la zone terminale libre comporte un coude en V servant de came de freinage (28), coïncidant avec la came d'encliquetage (18).

5. Cendrier basculant selon une ou plusieurs des revendications 2 à 4, caractérisé en ce que l'encoche (30) prévue dans la paroi postérieure (29) du bac à cendres (3) se raccorde, dans sa zone centrale servant à recevoir la came de freinage (28), à une rainure (32) dirigée vers le bas, délimitée par une butée (31).

6. Cendrier basculant selon une ou plusieurs des revendications 1 à 5, caractérisé en ce que le ressort d'éjection (20) comprend une section de bande d'acier à ressort fixée à la paroi de fond (21) du boîtier (2), comportant des zones terminales repliées obliquement, constituant des branches élastiques (22).

0 163 181

Fig.1

Fig.2

Fig. 3

Fig. 4

Fig. 5